# EUROPÄISCHE PATENTANMELDUNG

(11) **EP 1 181 975 A2**
(43) Veröffentlichungstag der Anmeldung: **27.02.2002**
(21) Anmeldenummer: 01119506.2
(22) Anmeldetag: 14.08.2001
(51) Int. Cl.: B01J 19/24, B01J 19/00, B01J 10/00

(54) **Reaktor zur mindestens teilweisen Entgasung von Reaktionsgemischen und zur Erhöhung der Reaktionsgeschwindigkeit**

(30) Priorität: 24.08.2000 DE 10041471
(71) Anmelder: Zentes Unitex GmbH, 63456 Hanau (DE)
(72) Erfinder: Finkeldei, Ferdinand, 60388 Frankfurt am Main (DE)
(74) Vertreter: Wolf, Günter, Dipl.-Ing.

(57) **Zusammenfassung**

Die Erfindung betrifft einen Reaktor zur mindestens teilweisen Entgasung von Reaktionsgemischen und zur Erhöhung der Reaktionsgeschwindigkeit. Dieser umfasst einen mit einer Reaktionsgemischmindestfüllhöhe (Hₘᵢₙ) zu betreibenden Reaktorbehälter (1), der ein vertikal angeordnetes, von einem vom Reaktionsgemisch durchströmten Ringspaltraum (3) umgebenes und beidseitig offenes Rohr (2) aufweist, wobei im Ringspaltraum (3) mindestens ein Wärmetauscher (4) vorgesehen und das Rohr (2) bei Reaktorbetrieb vollständig reaktionsgemischum- und -durchströmt ist. Nach der Erfindung ist vorgesehen, dass das vertikal höher gelegene, offene Ende des Rohres (2) mit einem einen engen (A_{eng}) und einen weiten, horizontal orientierten Querschnitt (A_{weit}) aufweisenden Trichter (5) versehen ist, wobei der enge Querschnitt (A_{eng}) rohrseitig und der weite Querschnitt (A_{weit}) vertikal unterhalb der Reaktionsgemischmindestfüllhöhe (Hₘᵢₙ) angeordnet ist.

## Beschreibung

Die Erfindung betrifft einen Reaktor zur mindestens teilweisen Entgasung von Reaktionsgemischen und zur Erhöhung der Reaktionsgeschwindigkeit gemäß dem Oberbegriff des Anspruchs 1.

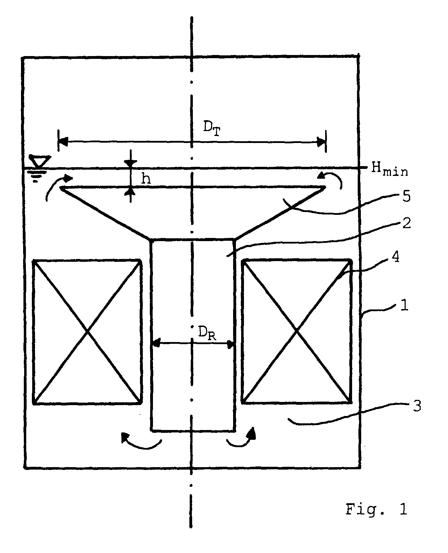

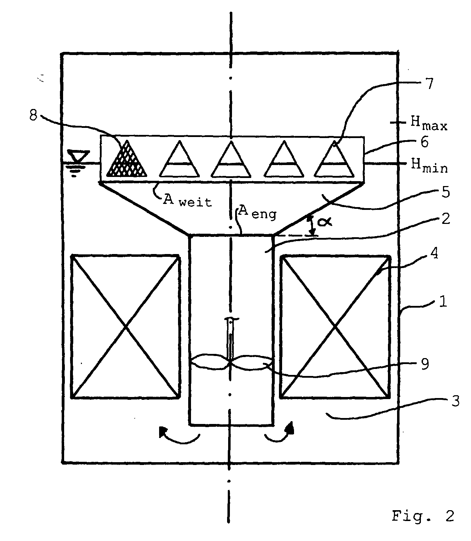

Derartige Reaktoren sind aus der Chemie u.a. bei der Herstellung von Kunststoffen, aus der Biotechnologie und aus der Pharmazie bekannt und in Benutzung, so dass diesbezüglich zunächst ein Verweis auf das Handbuch der Rührtechnik (EKATO Rühr- und Mischtechnik GmbH, 2. Auflage, ISBN 3-00-00 52 45-3, siehe insbesondere Abb. 3, Seite 170) genügt.

Am Beispiel der Herstellung von Polyester soll die prinzipielle Funktionsweise dieser Reaktoren kurz erläutert werden:

Polyester wird durch die Polykondensation von polyfunktionellen Carbonsäuren mit polyfunktionellen Alkoholen hergestellt. Um dabei das Gleichgewicht der reversiblen Reaktion auf die Seite des Polyesters zu verschieben, muss das bei der Kondensation anfallende Wasser kontinuierlich aus dem Reaktionsgemisch entfernt werden. Bei den vorherrschenden Viskositäten erfolgt die Verdampfung des Wassers aber vorwiegend an der Oberfläche des Reaktionsgemisches (siehe Handbuch der Rührtechnik Seite 169). Hier ist deshalb eine gute Umwälzung des Reaktorinhaltes erforderlich, was im einfachsten Fall durch eine von einem Wärmetauscher hervorgerufene Zwangsumwälzung geschieht. Das Reaktionsgemisch wird also durch die über Wärmetauscher zugeführte Energie im Ringspaltraum (Heizraum) nach oben befördert, wo es sich im zentralen Bereich des Reaktorbehälters sammelt, um von dort durch das zentrale, nicht beheizte Reaktorrohr wieder in den unteren Bereich des Reaktorgehäuses zu strömen. Am Gehäuseboden angelangt, erfährt das Reaktionsgemisch eine neuerliche Umlenkung, um wiederum zum Wärmetauscher zu gelangen, der in der Regel den ganzen Querschnitt des Ringspaltraumes einnimmt.

Durch die Wärmezufuhr sollen sich, wie erwähnt, im Reaktionsgemisch Wasserdampfblasen bilden, die aber (zumindest teilweise) aufgrund der hohen Strömungsgeschwindigkeit im Einlaufbereich des Zentralrohres nicht (wie beabsichtigt) zur freien Oberfläche aufsteigen und dort entweichen können, sondern in nachteiliger Weise mit der Gesamtströmung in das Zentralrohr hineingerissen werden. Auf diese Weise entsteht bezüglich des mitgerissenen Schaumes eine unerwünschte Kurzschlussströmung, aufgrund derer sich die Wärmeübertragung am Wärmetauscher verschlechtert. Eine genügende Wärmezufuhr ist aber wegen der hohen Verdampfungsenthalpie von Wasser für den Gesamtprozess sehr wichtig, d.h. die Kurzschlussströmung limitiert die Gesamtreaktionsgeschwindigkeit.

Bei Reaktoren, die zur Erhöhung des Wirkungsgrades mit einem im Zentralrohr angeordneten Rührer versehen sind, ist diese Situation noch problematischer, da die Strömungsgeschwindigkeit im Reaktor in der Regel insgesamt höher liegt und damit der Kurzschlusseffekt noch größer ist.

Gemäß der in diesem Zusammenhang zu erwähnenden US 4,469,444, bei der der Reaktor aber kein Zentralrohr aufweist und damit eine Kurzschlussströmung ohnehin unvermeidlich ist, soll dem Problem der Blasenbildung durch einen an der Rührerachse befestigten, sich mit dem Rührer drehenden Konus begegnet werden, der (wie auch die Rührerachse) eine Scherkraftwirkung auf die aufsteigenden Blasen ausübt, so dass diese zerplatzen. Diese Lösung ist an sich funktionstüchtig, kann aber nur bei Reaktoren ohne Zentralrohr und mit Rührer realisiert werden.

Der Erfindung liegt die Aufgabe zugrunde, bei einem Reaktor der zuerst genannten Art durch eine möglichst einfache konstruktive Maßnahme den Wärmeübergang trotz entstehender Dampfblasen (Schaum) zu verbessern.

Diese Aufgabe wird mit einem Reaktor der eingangs genannten Art durch die im Kennzeichen des Anspruchs 1 genannten Merkmale gelöst.

Der erfindungsgemäß vorgesehene Trichter erfüllt dabei die gestellte Aufgabe aufgrund mehrerer, sich gleichzeitig einstellender Effekte:

Die im zentralrohrnahen Bereich des Wärmetauschers entstandenen Blasen steigen am Rohr nach oben auf und treffen am oberen Ende des Rohres auf den Trichteransatz, was zu einer Strömungsumlenkung in den äußeren Reaktorbereich führt. Hierdurch kommt es im Wandbereich des Trichters gleichzeitig zu einer Zusammenführung der kleinen Bläschen, mit der Folge, dass grössere Blasen mit einer größeren Auftriebskraft, aber einer geringeren Stabilität entstehen. Dieser grobporige Schaum zerfällt beim Erreichen der Reaktionsgemischoberfläche relativ schnell, so dass insbesondere das Gas des Schaumes aus dem zentralrohrnahen Bereich des Wärmetauschers auf sichere Weise abgeführt wird und so den weiteren Prozess (insbesondere die Wärmeübertragung) nicht behindert.

Darüber hinaus hat der Trichter aber auch noch den Effekt, dass die Strömungsgeschwindigkeit im Übergangsbereich vom Ringspaltraum zum Zentralrohr aufgrund der größeren Zuströmfläche deutlich reduziert wird (die Zuströmfläche hat sich von πD_{R}h auf πD_{T}h erhöht, wobei D_{R} dem Durchmesser des Rohres, D_{T} dem größten Durchmesser des Trichters und h dem Abstand zwischen der Reaktionsgemischmindestfüllhöhe und der Oberkante des Zentralrohres [entsprechend mit und ohne Trichter] entspricht).

Folge dieser vergrösserten Zuströmfläche ist, dass die entstandenen Blasen nicht mehr so schnell in den Zentralbereich des Reaktors strömen und somit mehr Zeit verbleibt, um das in den Blasen befindliche Gas an der Reaktionsgemischoberfläche an die Umgebung abzugeben. Mittels des Trichters wird also die ansonsten vorhandene Kurzschlussströmung vermieden, die dazu führt, dass gerade entstandener Schaum direkt ins Rohr einströmt und beim Erreichen des Wärmetauschers die Wärmeübertragung behindert.

Bezüglich der Wärmeübertragung sei darauf hingewiesen, dass die Wärmetauscher in erster Linie natürlich dazu vorgesehen sind, Wärme in das Reaktionsgemisch einzubringen. Es ist aber u.a. auch möglich, dass, wie erwähnt, der Reaktor mit einem zusätzlichen Rührer im Zentralrohr ausgestattet ist. In einem solchen Fall kann es vorkommen, dass der Wärmetauscher auch zur Wärmeabfuhr verwendet wird.

Hinsichtlich der im Anspruch 1 genannten Reaktionsgemischmindestfüllhöhe ist noch anzumerken, dass derartige Reaktoren entweder im kontinuierlichen oder im diskontinuierlichen Betrieb gefahren werden. Unabhängig von der tatsächlich erreichbaren bzw. eingestellten Reaktionsgemischmaximalfüllhöhe muss aber bei allen Reaktoren dafür gesorgt werden, dass der Pegelstand des Reaktionsgemisches zu keinem Betriebszeitpunkt unterhalb des Einlaufquerschnittes des Rohres (bzw. nunmehr des Trichters) absinkt, da der Reaktor ansonsten nicht mehr funktionsfähig ist.

Schließlich wird noch auf eine andere bekannte Bauform hingewiesen (siehe wieder Handbuch der Rührtechnik bspw. S. 166, Abb. 5), bei der im Zentralbereich des Reaktors kein Rohr vorgesehen ist, bei dem es also schon im Bereich des Wärmetauschers zu dem unerwünschten Strömungskurzschluss kommt. - Bei einem solchen Reaktor ist der erfindungsgemäße Trichter natürlich an sich (d.h. allein) auch nicht weiter hilfreich, es sei denn, und genau das soll mit Anspruch 1 auch zum Ausdruck gebracht werden, man setzt in einen solchen Reaktor einen Trichter ein, der einen der Rohrlänge entsprechenden Trichterhals aufweist, d.h. Rohr und Trichter sind in diesem Fall gewissermaßen aus einem Stück gebildet.

Der erfindungsgemäße Reaktor und seine vorteilhaften Weiterbildungen gemäß der abhängigen Unteransprüche werden nachfolgend anhand der zeichnerischen Darstellung von Ausführungsbeispielen näher erläutert.

Es zeigen schematisch jeweils im Schnitt
- Fig. 1: den Reaktor mit Trichter in seiner einfachsten Ausfürungsform und
- Fig. 2: den Reaktor in einer bevorzugten Ausführungsform.

In Fig. 1 ist ein Reaktor zur mindestens teilweisen Entgasung von Reaktionsgemischen und zur Erhöhung der Reaktionsgeschwindigkeit dargestellt. Dieser umfasst einen mit einer Reaktionsgemischmindestfüllhöhe Hₘᵢₙ zu betreibenden Reaktorbehälter 1, der ein vertikal angeordnetes, von einem vom Reaktionsgemisch durchströmten Ringspaltraum 3 umgebenes und beidseitig offenes Rohr 2 aufweist, wobei im Ringspaltraum 3 ein ringförmig um das Rohr 2 verteilt angeordneter Wärmetauscher 4 vorgesehen und das Rohr 2 bei Reaktorbetrieb vollständig reaktionsgemischum- und -durchströmt ist.

Wesentlich für diesen Reaktor ist nun, dass das vertikal höher gelegene, offene Ende des Rohres 2 mit einem einen engen A_{eng} und einen weiten, horizontal orientierten Querschnitt A_{weit} aufweisenden Trichter 5 versehen ist, wobei der enge Querschnitt A_{eng} rohrseitig und der weite Querschnitt A_{weit} vertikal unterhalb der Reaktionsgemischmindestfüllhöhe Hₘᵢₙ angeordnet ist (siehe hierzu auch Fig. 2).

Zu- und Ablaufanschlüsse zum Reaktor sind, da ohne weiteres vorstellbar, nicht dargestellt.

Der erfindungsgemäße Trichter 5 bewirkt, wie erwähnt, dass sich die am Wärmetauscher (und, wenn vorhanden, am Rührer 9) gebildeten kleinen, stabilen Blasen zu großen instabilen Blasen vereinigen, die dann aufgrund ihrer größeren Auftriebskraft stärker zur Gemischoberfläche streben und dort zerplatzen. Durch diese deutliche Reduktion der ins Rohr 2 zurückgeführten Schaummenge wird darüber hinaus die Produktdichte im zentralen Rohrzulauf erhöht, was schließlich zu einem verbesserten Wärmeaustausch führt. Da insgesamt wesentlich weniger Schaum entsteht, kommt bei der Neuauslegung derartiger Reaktoren auch eine Verringerung des gesamten Reaktorvolumens in Betracht. Bei der Herstellung von Diglykolterephthalat führt der Trichter beispielsweise zu einer Dichteerhöhung von etwa 25 % (1100 kg/m³ statt vorher 880 kg/m³), was ferner aufgrund der geringen Blasenmenge eine um den Faktor 1,5 bis 4 höhere Wärmeübertragung am Wärmetauscher 4 bewirkt.

Bei der Auslegung des erfindungsgemäßen Trichters hat sich gezeigt, dass folgende Relation zu einem besonders guten Ergebnis führt: Die sich aus dem größten Trichterumfang (= 2 x Wurzel (πA_{weit}) = πD_{T}), multipliziert mit dem Abstand h (wobei h der Distanz zwischen der Reaktionsgemischmindestfüllhöhe Hₘᵢₙ und dem weiten Querschnitt A_{weit} des Trichters entspricht), ergebende Reaktionsgemischzuströmfläche sollte grössergleich als die Querschnittsfläche des Rohres 2 sein, denn dann ist eine gleichmäßige, langsame Zuströmung zum Trichterzentrum gewährleistet.

Ferner ist, wie Fig. 2 zeigt, vorteilhaft vorgesehen, dass am weiten Querschnitt A_{weit} des Trichter 5 ein im wesentlichen zylindrischer Fortsatz 6 (als Beruhigungswehr) angeordnet ist, der mindestens eine Öffnung 7 aufweist, die den Ringspaltraum 3 hydraulisch mit dem Rohr 2 verbindet, d.h. vom Wärmetauscher 4 kommendes Reaktionsgemisch kann durch die Öffnung 7 zum Trichter 5 und von dort zum Rohr 4 fliessen. Der zylindrische Fortsatz endet dabei vorzugsweise kurz unterhalb der Reaktionsgemischmaximalfüllhöhe Hₘₐₓ.

Um die Schaumbildung dabei weiter zu reduzieren und um die Strömung zu beruhigen, ist vorteilhaft vorgesehen, dass die mindestens eine Öffnung 7 mit mindestens einem reaktionsgemischdurchlässigen Sieb 8 versehen ist (für eine Öffnung 7 ist dies beispielhaft in Fig. 2 dargestellt).

Um eine möglichst große Menge ungeschäumtes Reaktionsgemisch zum Trichter zurückführen zu können, ist ferner vorteilhaft vorgesehen, dass die mindestens eine Öffnung 7 dreiecksförmig ausgebildet ist, wobei der freie Durchströmquerschnitt in Richtung des Rohres 2, also von oben nach unten, zunimmt. Diese Gestaltung bewirkt, dass insbesondere das unterhalb der Reaktionsgemischoberfläche befindliche Reaktionsgemisch und nicht der an der Oberfläche treibende Schaum zur Rückströmung gelangt. Die Strömungsgeschwindigkeit im Bereich der Öffnungen 7 beträgt vorzugsweise 0,1 (bei Hₘₐₓ) bis 2,0 m/s.

Zur beschleunigten Umwälzung des Reaktionsgemisches ist darüber hinaus vorteilhaft vorgesehen, dass im Rohr 2 ein von ausserhalb des Reaktors angetriebener Rührer 9 angeordnet ist.

Der Öffnungswinkel α des Trichters 5 ist ferner derart gewählt, dass der Strömungswiderstand an der dem Wärmetauscher 4 zugewandten Seite des Trichters 5 über den gesamten Bereich zwischen dem Rohr 2 und dem weitem Querschnitt A_{weit} gleich ist. Damit wird bewirkt, dass das mit Blasen durchsetzte Reaktionsgemisch an der Unterseite des Trichters 5 staufrei zum Rand des Trichters 5 fließen kann. Typischer Weise liegt α im Bereich zwischen 5° und 45°.

### Bezugszeichenliste

- 1: Reaktorbehälter
- 2: Rohr
- 3: Ringspaltraum
- 4: Wärmetauscher
- 5: Trichter
- 6: Fortsatz
- 7: Öffnung
- 8: Sieb
- 9: Rührer

- A_{eng}: enger Querschnittsfläche des Trichters
- A_{weit}: weiter Querschnittsfläche des Trichters
- D_{R}: Durchmesser des Rohres
- D_{T}: Grösster Durchmesser des Trichters
- h: Abstand zwischen Hₘᵢₙ und A_{weit}
- Hₘᵢₙ: Reaktionsgemischmindestfüllhöhe
- Hₘₐₓ: Reaktionsgemischmaximalfüllhöhe

- α: Öffnungswinkel des Trichters

## Patentansprüche

1. Reaktor zur mindestens teilweisen Entgasung von Reaktionsgemischen und zur Erhöhung der Reaktionsgeschwindigkeit, umfassend einen mit einer Reaktionsgemischmindestfüllhöhe (Hₘᵢₙ) zu betreibenden Reaktorbehälter (1), der ein vertikal angeordnetes, von einem vom Reaktionsgemisch durchströmten Ringspaltraum (3) umgebenes und beidseitig offenes Rohr (2) aufweist, wobei im Ringspaltraum (3) mindestens ein Wärmetauscher (4) vorgesehen und das Rohr (2) bei Reaktorbetrieb vollständig reaktionsgemischum- und -durchströmt ist,
**dadurch gekennzeichnet,**
**dass** das vertikal höher gelegene, offene Ende des Rohres (2) mit einem einen engen (A_{eng}) und einen weiten, horizontal orientierten Querschnitt (A_{weit}) aufweisenden Trichter (5) versehen ist, wobei der enge Querschnitt (A_{eng}) rohrseitig und der weite Querschnitt (A_{weit}) vertikal unterhalb der Reaktionsgemischmindestfüllhöhe (Hₘᵢₙ) angeordnet ist.

2. Reaktor nach Anspruch 1,
**dadurch gekennzeichnet,**
**dass** eine sich aus dem größten Trichterumfang (= 2 x Wurzel (πA_{weit}) = πD_{T}), multipliziert mit dem Abstand (h) zwischen der Reaktionsgemischmindestfüllhöhe (Hₘᵢₙ) und dem weiten Querschnitt (A_{weit}) des Trichters, ergebende Reaktionsgemischzuströmfläche grössergleich als die Querschnittsfläche des Rohres (2) ist.

3. Reaktor nach Anspruch 1 oder 2,
**dadurch gekennzeichnet,**
**dass** am weiten Querschnitt (A_{weit}) des Trichter (5) ein im wesentlichen zylindrischer Fortsatz (6) angeordnet ist, der mindestens eine Öffnung (7) aufweist, die den Ringspaltraum (3) hydraulisch mit dem Rohr (2) verbindet.

4. Reaktor nach Anspruch 3,
**dadurch gekennzeichnet,**
**dass** die mindestens eine Öffnung (7) mit mindestens einem reaktionsgemischdurchlässigen Sieb (8) versehen ist.

5. Reaktor nach Anspruch 3 oder 4,
**dadurch gekennzeichnet,**
**dass** die mindestens eine Öffnung (7) dreiecksförmig ausgebildet ist, wobei der sich horizonal erstreckende Öffnungsbereich in Richtung des Rohres (2) zunimmt.

6. Reaktor nach einem der Ansprüche 1 bis 5,
**dadurch gekennzeichnet,**
**dass** im Rohr (2) ein von ausserhalb des Reaktors angetriebener Rührer (9) angeordnet ist.

7. Reaktor nach einem der Ansprüche 1 bis 6,
**dadurch gekennzeichnet,**
**dass** der Trichter (5) einen Öffnungswinkel (α) derart aufweist, dass der Strömungswiderstand an der dem Wärmetauscher (4) zugewanden Seite des Trichters (5) über den gesamten Bereich zwischen dem Rohr (2) und dem weitem Querschnitt (A_{weit}) gleich ist.
